# EUROPÄISCHE PATENTANMELDUNG

(11) **EP 0 919 349 A2**
(43) Veröffentlichungstag der Anmeldung: **02.06.1999**
(21) Anmeldenummer: 98121036.2
(22) Anmeldetag: 05.11.1998
(51) Int. Cl.: B29C 35/04, B29D 30/06

(54) **Verfahren und Vorrichtung zur Vulkanisierung von Fahrzeugluftreifen oder Teilen von Fahrzeugluftreifen in einer Heizpresse**

(30) Priorität: 27.11.1997 DE 19752461
(71) Anmelder: Continental Aktiengesellschaft, 30165 Hannover (DE)
(72) Erfinder: Haase, Ralf, Dipl.-Ing., 1230 Wien (AT)

(57) **Zusammenfassung**

Das Verfahren für eine mit einem dampfförmigen Heizmedium betriebene, mit oder ohne Balg arbeitende Heizpresse für Fahrzeugluftreifen oder für einen torusförmigen Teil von Fahrzeugluftreifen sieht vor, dass das während der Vulkanisation entstehende Kondensat, vorzugsweise unter Ausnützung des herrschenden Überdruckes, mittels zumindest eines im Bereich der tiefsten Stelle im Reifen- oder Balginneren positionierten Röhrchens, Schlauches od. dgl. abgeleitet wird. Dabei wird das während der Vulkanisation entstehende Kondensat derart ständig abgeleitet, dass während der Vulkanisation die Kondensatmenge im Reifen- bzw. Balginneren minimal bleibt und die über das Heizmedium auf den Reifen wirkende Temperatur während der Vulkanisation an allen Stellen zumindest im Wesentlichen gleich groß ist.

Das Verfahren für eine mit einem flüssigem Heizmedium betriebene, mit oder ohne Balg arbeitende Heizpresse für Fahrzeugluftreifen oder für einen torusförmigen Teil von Fahrzeugluftreifen sieht vor, dass das im Reifen- oder im Balginneren befindliche flüssige Heizmedium während der Vulkanisation zum Zirkulieren und Durchmischen gebracht wird. Dabei wird an zumindest einer Stelle im oberen Bereich des Reifen- oder Balginneren Heizmedium abgeführt und an zumindest einer Stelle im unteren Bereich des Reifen- oder Balginneren Heizmedium zugeführt.

## Beschreibung

Die gegenständliche Erfindung betrifft ein Verfahren und eine Vorrichtung für eine mit einem dampfförmigen Heizmedium betriebene Heizpresse für Fahrzeugluftreifen oder für einen torusförmigen Teil von Fahrzeugluftreifen, sowie ein Verfahren und eine Vorrichtung für eine mit einem flüssigen Heizmedium betriebene Heizpresse für Fahrzeugluftreifen oder für einen torusförmigen Teil von Fahrzeugluftreifen.

Die üblicherweise zum Vulkanisieren von Fahrzeugluftreifen, seien es PKW-Reifen oder LKW-Reifen, eingesetzten Heizpressen vulkanisieren den Reifen mittels eines über den Innenraum des Reifens wirkenden Heizmediums. Dabei wird bei PKW-Reifen im allgemeinen als Heizmedium Wasserdampf, die Kombination Wasserdampf-Stickstoff oder auch, wenn auch eher selten, die Kombination Wasserdampf-Heißwasser verwendet. Bei der Vulkanisation von LKW-Reifen wird im allgemeinen als Heizmedium die Kombination Dampf-Heißwasser, die Kombination Wasserdampf-Stickstoff oder Heißwasser allein verwendet. Der noch unvulkanisierte Reifen befindet sich in der Heizpresse dabei üblicherweise in einer liegenden, waagrechten Lage.

Bei den üblichen Verfahren zum Vulkanisieren von Reifenrohlingen wird ein expandierbarer Heizbalg aus Gummi verwendet, über den unabhängig vom verwendeten Heizpressentyp, der zu vulkaniserende Reifen bombiert und gegen die Heizform gedrückt wird. Der Balg erfüllt eine Reihe von Funktionen, insbesondere das Zentrieren des Reifenrohlings solange die Form nicht geschlossen ist, das Trennen des Heizmediums vom Rohling, das Ausformen der Wulstzehen und der Innenlage des Reifens und die Systemabdichtung nach außen. Es sind ferner auch Vorrichtungen und Verfahren vorgeschlagen worden, mit welchen Reifenrohlinge balglos vulkanisiert werden sollen. Ein derartiges Verfahren und eine derartige Vorrichtung sind beispielsweise in der noch nicht veröffentlichten europäischen Patentanmeldung mit der Anmeldenummer 97890093.4 beschrieben. Dort wird das System Presse-Form-Reifen innerhalb der Wulstringe durch die Heizform und/oder die Presse und außerhalb der Wulstringe durch den Reifen selbst abgedichtet. Beim Schließen der Heizpresse werden die beiden Wulstringe soweit aneinander angenähert, bis entweder die Eigensteifigkeit des zu vulkanisierenden Reifens eine Aufrückkraft auf die Wulstringe ausübt oder die beiden Wulstringe einander berühren. Durch das Einleiten von Spanndampf werden die Reifenwülste dampfdicht auf die beiden Wustringe gedrückt.

Das balglose Vulkanisieren von Reifen ist mit einer Reihe von Vorteilen verbunden. Einerseits treten merkliche Rationalisierungseffekte ein, beispielsweise durch das Wegfallen der Inneneinspritzung, der Balgfertigungs- und Balghandlingskosten, wobei auch die spürbare Heizzeitverkürzung zu erwähnen ist. Andererseits können balglos vulkanisierte Reifen qualitativ besser gefertigt werden, als es mit einem Balg möglich ist.

Sowohl das Heizen mit Balg als auch das Heizen ohne Balg haben jedoch den Nachteil, daß, und zwar unabhängig vom verwendeten Heizmedium, die untere Reifenhälfte, die sich im Bereich der Formunterseite befindet, schlechter beheizt wird als die obere. Bei der bereits erwähnten Dampfheizung und der mit Dampf und Stickstoff erfolgenden Heizung bildet sich während der Vulkanisation dadurch, daß der Reifen kühler ist als das Heizmedium, an der Reifeninnenseite (beim balglosen Vulkanisieren) bzw. an der Balginnenseite Kondensat (Wasser), welches zur tiefsten Stelle bzw. zum tiefsten Bereich des Innenraumes fließt und dort eine Art See bildet, der einen großen Bereich der unteren Reifenhälfte kühlt. Dabei ist gerade im Bereich der Schulter und des Wulstes die dadurch verursachte schlechtere Beheizung besonders nachteilig. Hier besitzt nämlich der Reifen seine größten Materialstärken und gerade diese Bereiche bestimmen somit die Dauer der Vulkansiationszeit.

Aus der DE-A 2 201 080 ist bereits eine ein- und ausfahrbare Absaugvorrichtung für das während der Vulkanisation im Balg entstehende Kondensat geoffenbart, die ein Röhrchen aufweist, welches im Bereich der tiefsten Stelle im Heizbalg positioniert wird. Diese Vorrichtung scheint lediglich zum gelegentlichen Entleeren von angesammeltem Kondensat vorgesehen zu sein, so dass in diese Druckschrift die oben erwähnte Problematik keinen Eingang gefunden hat.

Im Falle des Einsatzes einer Dampf-Heizwasser- oder einer Heißwasserheizung bildet sich in dem mit Heißwasser gefüllten Reifen (beim balglosen Vulkanisieren) oder im mit Heißwasser gefüllten Balg durch das Aufsteigen von heißerem und dem Absinken von kühlerem Wasser ein Temperaturgefälle von oben nach unten.

Aus der DE-A 2 252 555 ist eine Vorrichtung bekannt, mit der eine gleichmäßige Temperaturverteilung von flüssigem Heizmedium im Reifen- bzw. Balginneren erzielt werden soll. Dabei soll das Heizmedium zum Zirkulieren bzw. Durchmischen gebracht werden, indem das über eine Zuleitung heran geführte Heizmedium in einem im Zentrum der Heizpresse und somit auch im Zentrum des zu vulkanisierenden Reifens angeordneten Ringraum geleitet wird. Dort strömt das Heizmedium durch im Wesentlichen radial verlaufenden Kanäle, die mit Düsen versehen sind, in das Innere des Heizbalges. Im Bereich des Zentrums befindet sich auch die Stelle des Abflusses für das Heizmedium. Beide Stellen, Zufuhr und Abfluß, liegen somit weit weg von den durch eine Thermosyphonwirkung entstehenden kältesten und wärmsten Stellen des Heizmediums im Reifen- bzw. Balginneren. Es ist daher davon auszugehen, dass mit dieser bekannten Vorrichtung die erwünschte Wirkung, nämlich das Erreichen einer gleichmäßigen Temperaturverteilung, höchstens eingeschränkt erzielbar ist.

Die maximale Temperatur des Heizmediums wird durch die Temperaturbelastbarkeit der Reifenbauteile während der Vulkanisation bestimmt. Sie wird so gewählt, daß an der oberen Reifenhälfte keine unerwünschten Temperaturüberschreitungen stattfinden. Da jedoch, wie oben erläutert, die untere Reifenhälfte während der Vulkanisation kühler ist als die obere Reifenhälfte, muß entsprechend der Temperaturdifferenz länger geheizt werden. Dies bedingt einen unnötig erhöhten Energieverbrauch. Die längere Heizzeit ergibt sich aus der notwendigen Vernetzung der Reifenbauteile im Bereich der unteren Reifenhälfte, wo die für diesen Bereich optimalen Heizbedingungen eingestellt werden müssen. Dadurch wird jedoch der Reifen an seiner Oberseite zu lange geheizt, was, wie Testergebnisse gezeigt haben, für die Qualität der Reifen von Nachteil ist. So hat sich aus diversen Prüfungen insbesondere gezeigt, daß jene Reifenbereiche, die im Bereich der Formoberseite beheizt wurden, häufiger zu Gürtellagen- und Hochschlagtrennungen neigen als jene Reifenbereiche, die im Bereich der Formunterseite geheizt wurden.

Hier setzt nun die Erfindung ein, deren Aufgabe darin besteht, entsprechende Verfahren und Vorrichtungen für Heizpressen zur Verfügung zu stellen bzw. zu entwickeln, mit denen diese Nachteile beseitigt werden können und die auch die Nachteile der aus dem oben beschriebenen Stand der Technik bekannten Vorrichtungen und Verfahren nicht aufweisen.

Für eine Heizpresse, bei der als Heizmedium Dampf oder die Kombination Dampf mit Stickstoff eingesetzt wird, wird diese Aufgabe, was das Verfahren betrifft, erfindungsgemäß dadurch gelöst, dass das während der Vulkanisation entstehende Kondensat ständig abgeleitet wird, so dass während der Vulkanisation die Kondensatmenge im Reifen- bzw. Balginneren minimal bleibt und die über das Heizmedium auf den Reifen wirkende Temperatur während der Vulkanisation an allen Stellen zumindest im Wesentlichen gleich groß ist.

Für eine Heizpresse, bei der als Heizmedium die Kombination Dampf-Heißwasser oder Heißwasser allein verwendet wird, wird diese Aufgabe, was das Verfahren betrifft, erfindungsgemäß dadurch gelöst, dass an zumindest einer Stelle im oberen Bereich des Reifen- oder Balginneren Heizmedium abgeführt und an zumindest einer Stelle im unteren Bereich des Reifen- oder Balginneren Heizmedium zugeführt wird.

In beiden Fällen ist die erfindungsgemäße Lösung sehr einfach. In dem einen Fall, bei der Verwendung von Dampf oder Dampf-Stickstoff als Heizmedium wird das sich während der Vulkanisation bildende Kondensat aus dem Bereich des Heizmediumraumes ständig nach außen abgeleitet, sodaß es zu keiner Abkühlung des Reifens mehr im Bereich der Formunterseite kommen kann, im zweiten Fall, bei der Verwendung der Kombination Dampf-Heißwasser oder der Verwendung von Heißwasser allein als Heizmedium stellt die ständige Durchmischung des im Reifeninneren bzw. im Balginneren befindlichen Wassers - durch ein Abführen von Heizmedium im oberen Bereich des Reifen- bzw. Balginneren und ein Zuführen von Heizmedium im unteren Bereich des Reifen- bzw. Balginneren - sicher, dass das genannte Temperaturgefälle nicht mehr auftritt. Auch in diesem Fall ist daher die auf den Reifen über das Heizmedium wirkende Temperatur an allen Stellen zumindest im Wesentlichen gleich groß.

Es hat sich herausgestellt, daß die erzielbare Heizzeitverkürzung beträchtlich sein kann. Je nach Reifentyp, ob PKW-Reifen oder LKW-Reifen und auch je nach Heizmedium sind Heizzeitverkürzungen gegenüber der ursprünglichen Situation um 5 bis 10 % durchaus erzielbar. Auch die erzielte Qualitätisverbesserung der derart vulkanisierten Reifen ist ein sehr positiver Aspekt der erfindungsgemäßen Lösung.

Bei einer besonders vorteilhatten Ausführungsform des erfindungsgemäßen Verfahrens für eine mit einem dampfförmigen Heizmedium betriebene Heizpresse wird das Kondensat in ein Entleerungssystem, insbesondere ein Rohrnetz, geleitet dessen Innendruck höchstens und insbesondere atmospherischem Druck entspricht. Damit läßt sich eine Entleerung des Kondensat aus dem Reifen- bzw Balginneren erzielen, bei der praktisch keine Kondensatansammlungen mehr verbleiben.

Bei diesem erfindungsgemäßen Verfahren wird ferner das Kondensat über zumindest eine Einströmöffnung an dem an der tiefsten Stelle im Reifen- oder Balginneren positionierten Endbereich des Röhrchens, Schlauches od. dgl. abgeleitet. Dadurch kann eine ungünstige scharfkantige Ausbildung des Endes des Röhrchens vermieden werden und insbesondere beim Vorsehen einer Anzahl von Einströmöffnungen das Ableiten von Kondensat unterstützt werden.

Ein besonders einfaches und wirkungsvolles Ableiten des Kondensates nach außen kann nach einem weiteren Merkmal der Erfindung über einen mit dem Röhrchen, Schlauch od. dgl. verbundenen Kondensatableiter erfolgen.

Es ist ferner von Vorteil, wenn das Röhrchen, der Schlauch od. dgl. gemeinsam mit dem Zuleiten des Heizmediums im Reifen- oder Balginneren positioniert wird. Diese Maßnahme hat einerseits den Vorteil, daß das Röhrchen schon vor dem Entstehen von Kondensat entsprechend positioniert ist und es kann weiters eine Kopplung der beiden Vorgänge, nämlich Einleiten des Heizmediums und Einfahren des Röhrchens über geeignete Einrichtungen durchgeführt werden.

Die erfindungsgemäße Vorrichtung für eine mit einem dampfförmigen Heizmedium betriebene Heizpresse umfaßt ein Röhrchen, einen Schlauch od. dgl., welches bzw. welcher im Reifen- oder Balginneren über einen Betätigungsmechanismus positionierbar ist, und einen mit dem Röhrchen, dem Schlauch od. dgl. verbundenen und insbesondere außerhalb der Heizpresse positionierten Kondensatableiter. Die erfindungsgemäße Vorrichtung ist dadurch gekennzeichnet, dass das Röhrchen, der Schlauch oder dgl. das während der Vulkanisation entstehende Kondensat ständig ableitet. Damit stellt die erfindungsgemäße Vorrichtung sicher, dass im Reifeninneren oder im Balginneren keine nennenswerten Ansammlungen von Kondensat entstehen.

Um ein sofortiges und zuverlässiges Ableiten des Kondensates sicher zu unterstützen, ist das Röhrchen, der Schlauch od. dgl. an seinem Ende mit zumindest einer Einströmöffnung, insbesondere aber mit einer Anzahl von Einströmöffnungen, versehen.

Bei einer bevorzugten Ausführungsform des erfindungsgemäßen Verfahren für eine mit einem flüssigen Heizmedium betriebene Heizpresse wird Heizmedium von zumindest einer Stelle im höchsten Bereich des Reifen- bzw. Balginneren abgeführt und an einer Stelle im tiefsten Bereich zugeführt. Diese Maßnahme unterstützt eine sehr gleichmäßige Durchmischung des Heizmediums im Reifen- bzw. Balginneren.

Bei einer weiteren bevorzugten Ausführungsform dieser erfindungsgemäßen Variante des Verfahrens wird das Abführen und Zuführen des Heizmediums innerhalb eines geschlossenen Systems durchgeführt. Bei dieser Ausführungsform wird daher das im wärmeren Bereich entnommen Heizmedium im kälteren Bereich wieder zugeführt. Bei einer alternativen Ausführungsvariante kann auch vorgesehen werden, dass das Ab- und Zuführen nicht in einem geschlossenen System erfolgt, sondern dass im unteren Bereich des Reifen- bzw. Balginneren frisches Heizmedium zugeführt wird.

Gemäß einem weiteren Merkmal dieser Varianten der Erfindung wird das flüssige Heizmedium mittels einer Pumpe, die außerhalb der Heizpresse und somit leicht zugänglich und wenig störungsanfällig positioniert wird, durchmischt.

Um das Durchmischen und Zirkulieren des flüssigen Heizmediums auf eine besonders einfache Weise durchführen zu können, wird dabei die Pumpe mit dem Reifen- oder Balginneren über mindestens zwei Röhrchen, Schläuche od. dgl. verbunden.

Die nach der vorliegenden Erfindung vorgeschlagene Vorrichtung für eine mit einem flüssigen Heizmedium betriebene Heizpresse umfaßt zumindest zwei in das Reifen- oder Balginnere führende Röhrchen, Schläuche od. dgl., einen Betätigungsmechanismus zum Ein- und Ausfahren dieser Zu- und Ableitungen sowie eine außerhalb der Heizpresse positionierte Pumpe. Auch bei dieser erfindungsgemäßen Vorrichtung handelt es sich daher um eine sehr einfach aufgebaute Vorrichtung, die eine zuverlässige Arbeitsweise besitzt.

Dabei ist von den Röhrchen, Schläuchen od. dgl. zumindest eines bzw. einer im oberen Bereich und zumindest eines bzw. einer im unteren Bereich des Reifen- oder Balginneren positionierbar. Dies ist für eine gute Zirkulation und Durchmischung des flüssigen Heizmediums erforderlich, da derart über zumindest ein im oberen Bereich angeordnetes Röhrchen, einen Schlauch od. dgl. flüssiges Heizmedium abgepumpt und über zumindest ein im unteren Bereich befindliches Röhrchen, einen Schlauch od. dgl. Heizmedium zugegeben wird.

Ein gutes Durchmischen und eine gute Zirkulation des flüssigen Heizmediums wird dadurch unterstützt, wenn die Röhrchen, Schläuche od. dgl. Endabschnitte besitzen, die in Umfangsrichtung weisen. In diesem Zusammenhang ist es auch von großem Vorteil, wenn der Endabschnitt eines im oberen Bereich des Reifens- oder Balginneren positionierten Röhrchens, Schlauches od. dgl. in die zum Endabschnitt eines im unteren Bereich positionierten Röhrchens, Schlauches od. dgl. entgegengesetzte Richtung weist.

Um die Wärmeabgabe nach außen möglichst gering zu halten ist es von Vorteil, wenn die das flüssige Heizmedium transportierenden Bauteile, wie Röhrchen, Schläuche, die Pumpe und. dgl. wärmeisoliert sind.

Bei sämtlichen Ausführungsformen, also sowohl bei einer Vorrichtung, die für eine mit einem dampfförmigen Heizmedium betriebene Heizpresse vorgesehen ist als auch bei einer Vorrichtung, die für eine mit einem flüssigen Heizmedium betriebene Heizpresse vorgesehen ist, kann der Betätigungsmechanismus zum Ein- und Ausfahren konstruktiv einfach aufgebaut werden und beispielsweise zumindest eine Hubvorrichtung, zumindest eine Kulissenführung od. dgl. sowie einen über diese betätigbaren, mit dem Röhrchen, dem Schlauch od. dgl. verbundenen Schlitten umfassen.

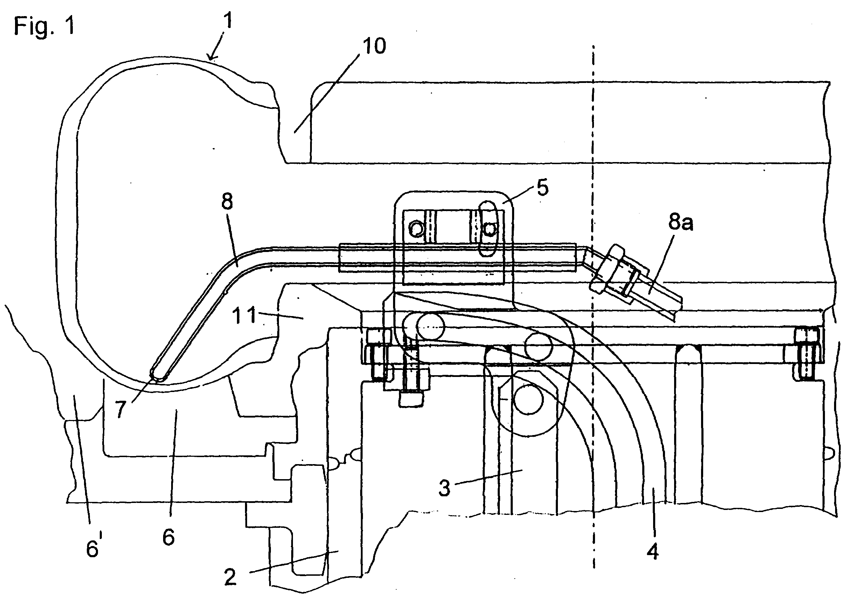

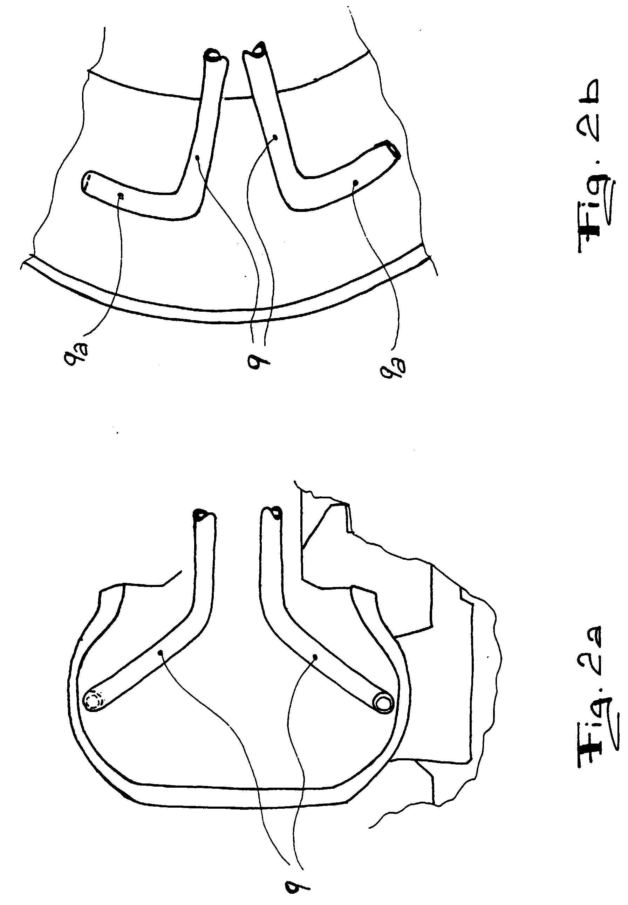

Weitere Merkmale, Vorteile und Einzelheiten der Erfindung werden nun anhand der Zeichnung, die zwei Ausführungsbeispiele darstellt, näher beschrieben. Dabei zeigt Fig. 1 schematisch und im Schnitt eine Ausführungsvariante einer Vorrichtung zur Kondensatabführung bei Verwendung eines dampfförmigen Heizmediums und Fig. 2a und 2b schematisch Teile einer Ausführungsvariante für eine Vorrichtung zur Zirkulation eines flüssigen Heizmediums.

Die gegenständliche Erfindung ist sowohl beim herkömmlichen Vulkanisieren von Reifen mittels eines Balges als auch beim balglosen Vulkanisieren von Reifen einsetzbar. Die Erfindung kann ferner bei allen Arten von in Vulkanisationsformen geheizten Reifen - PKW-Reifen, LKW-Reifen oder Reifen für andere Einsatzzwecke - eingesetzt werden und ist auch nicht auf bestimmte Vulkanisationsformen bzw. Heizpressentypen eingeschränkt. Darüber hinaus ist die Erfindung bei den allgemein üblichen Innenheizverfahren - bei PKW-Reifen sind dies die Dampfverfahren, das Dampf-Stickstoffverfahren und das Dampf-Heißwasserverfahren, bei LKW-Reifen das Dampf-Heißwasserverfahren, das Dampf-Stickstoffverfahren und das Heißwasserverfahren - anwendbar. Die gegenständliche Erfindung läßt sich ferner auf besonders einfache Weise bei Vulkanisationsverfahren, die ohne Balg arbeiten, einsetzen, da hier der konstruktive Aufwand am geringsten ist. Die Erfindung ist jedoch auf balglose Vulkanisationsverfahren nicht eingeschränkt.

Erwähnt sei ferner, daß erfindungsgemäße Verfahren und Vorrichtungen auch bei der Vulkanisation von Reifen einsetzbar sind, die gemäß dem aus der EP-A 0 729 825 offenbarten Verfahren hergestellt bzw. aufgebaut werden. Bei diesem Verfahren erfolgt eine Zweiteilung des Reifenaufbaus, indem zuerst ein Teilreifen, beispielsweise bis auf den Laufstreifen, aufgebaut und vulkanisiert wird. Dabei können sowohl der zuerst erstellte Teilreifen als auch der später komplettierte Reifen unter Verwendung der erfindungsgemäßen Verfahren und der erfindungsgemäßen Vorrichtungen vulkanisiert werden.

Die Ausführungsbeispiele demonstrieren die Funktionsweise der gegenständlichen Erfindung an einem balglosen Vulkanisationsverfahren. Ein derartiges Verfahren ist beispielsweise in der europäischen Patentanmeldung mit der Anmeldenummer 97890093.4 beschrieben. Dabei handelt es sich hier um ein Vulkanisationsverfahren, welches in einer automatisch betätigbaren Heizpresse, die eine schließ- und öffenbare zwei- oder mehrteilige Vulkanisationsform mit Wulstringen zur Positionierung und Formgebung der Reifenwülste aufweist, abläuft. Dabei wird das System Presse-Form-Reifen innerhalb der Wulstringe durch die Heizform und/oder die Presse und außerhalb der Wulstringe durch den Reifen selbst abgedichtet.

Das in Fig. 1 dargestellte Ausführungsbeispiel der Erfindung ist für jene Heizverfahren anwendbar, bei denen als Heizmedium Dampf oder die Kombination Dampf-Stickstoff verwendet wird. Wie aus Fig. 1 ersichtlich ist, ist der Reifen 1 in der Heizpresse bereits entsprechend positioniert, d.h. der Reifen 1 ist durch Wulstringe 10, 11, durch Seitenschalen 6 und durch Formsegmente 6', die sich bereits sämtlich in ihrer geschlossenen, zum Vulkanisieren bereiten Lage befinden, gehalten. Die Zeichnungsfigur zeigt nur ein Teilbereich der Reifenform und den Teil des dort befindlichen Reifens im Schnitt. Wie üblich nimmt der Reifen in der geschlossenen Heizpresse eine liegende, waagrechte Position ein.

Die strichpunktierte Linie in Fig. 1 versinnbildlicht die Mittelebene des Einströmkanales 2 für das Heizmedium. Hier ist ein Hubzylinder 3 untergebracht, über welchen ein in einer Führungskulisse 4 bewegbarer Schlitten 5 betätigbar ist. Beim dargestellten Ausführungsbeispiel ist dabei diese Führungskulisse 4 mit einem Schlitz ausgeführt, über welchen der Schlitten 5 vorerst senkrecht und dann über einen bogenförmigen Verlauf des Schlitzes auch in waagrechter Richtung bewegbar ist. Der Schlitten 5 kann, wie dargestellt, mittels Stifte, Bolzen od. dgl. in die Führungskulisse 4 eingreifen und somit dort bewegbar sein. Am Schlitten 5 ist ein Röhrchen 8 befestigt, dessen freier Endbereich derart gebogen gestaltet ist, daß das Ende des Röhrchens 8 über den Schlitten 5 in eine Lage bewegt werden kann, wo es an der tiefsten Stelle im Reifeninnenraum positioniert ist. An seinem Endbereich ist das Röhrchen 8 abgerundet gestaltet und mit zumindest einer gegenüber seiner inneren Querschnittsfläche kleinen Einströmöffnung 7, hier ist es eine Anzahl von Einströmöffnungen 7, versehen. Das andere Ende des Röhrchens 8 ist mit dem einen Ende eines Schlauches 8a verbunden, welcher eine Verbindung zu einem außerhalb der Heizpresse befindlichen Kondensatableiter, der in herkömmlicher Weise aufgebaut sein kann, herstellt.

Wie bereits weiter oben beschrieben, entsteht während der Vulkanisation des Reifens Kondensat an der Innenseite des Reifens welches zur tiefsten Stelle bzw. zum tiefsten Bereich im Innenraum des Reifens fließt und dort einen See bildet, der die untere Reifenhälfte abkühlt. Wird nun, beispielsweise nach dem vollständigen Schließen der Heizpresse und gemeinsam mit dem Einströmen des Heizmediums, das Röhrchen 8 im Inneren des zu vulkanisierenden Reifens an die tiefste Stelle geführt, so wird das sich bildende und zur tiefsten Stelle im Reifeninneren fließende Kondensat sofort über die Einströmöffnungen 7, und zwar infolge des im Reifeninneren herrschenden Überdruckes, kontinuierlich abgeführt, sodaß sich gar kein Kondensat, wie es beim Stand der Technik der Fall ist, ausbilden kann.

Anstelle eines Röhrchens können selbstverständlich und vorzugsweise an unterschiedlichen Stellen im Reifen mehrere Röhrchen positioniert werden.

Bei einer besonders vorteilhaften Ausführungsform wird das Kondensat in ein Entleerungssystem, beispielsweise ein Rohrnetz abgeleitet, dessen Innendruck höchstens und insbesondere atmosphärischem Druck entspricht. Dies kann beispielsweise dadurch erzielt werden, dass die Rohre des Entleerungssystems an mehreren Stellen über eine Vertikalentlüftung - etwa Verbindungsrohre, die über das Gebäudedach ragen - verfügen.

Das zweite, in Fig. 2a und Fig. 2b dargestellte Ausführungsbeispiel befaßt sich mit einer Lösung für den Fall, daß mit Heißwasser oder mit der Kombination Dampf-Heißwasser geheizt wird, was üblicherweise bei LKW-Reifen der Fall ist. Wie bereits oben ausführlich beschrieben, bildet sich in dem mit Heißwasser gefüllten Reifen während der Vulkanisation durch das Aufsteigen des heißen und das Absinken des etwas kühleren Wassers ein Temperaturgefälle von oben nach unten. Wie Fig. 2a zeigt, werden in das Innere des in der Heizpresse positionierten Reifens 1 zumindest zwei Röhrchen 9, und zwar eines im Bereich der tiefsten und das zweite im Bereich der höchsten Stelle des Reifeninnenraumes eingeführt. Der zugehörige Betätigungsmechanismus zum Ein- und Ausfahren ist hier nicht dargestellt. Er kann analog zu dem in Fig. 1 dargestellten ausgebildet sein und somit auch analog funktionieren. Die beiden Röhrchen 9 besitzen abgebogene Endbereiche 9a, derart, daß diese in die beiden entgegengesetzten Umfangsrichtungen im Reifeninnenraum weisen. Dies ist in Fig. 2b verdeutlicht, wo der Reifen 1 quasi aufgeschnitten mit den eingefahrenen Röhrchen 9 dargestellt ist. Die beiden Röhrchen 9 sind, beispielsweise ebenfalls über entsprechende Schläuche (hier nicht dargestellt), mit einer außerhalb der Heizpresse angeordneten Zirkulationspumpe verbunden, über die durch das im oberen Bereich des Reifens befindliche Röhrchen 9 heißes Wasser abgesaugt und über das zweite Röhrchen 9 in den Reifeninnenraum wieder entlassen wird. Bei einer alternativen Ausführungsform kann vorgesehen werden, dass das abgeführte Heizmedium nicht rückgeführt wird, sondern dass im unteren Bereich des Reifen- bzw. Balginneren frisches Heizmedium zugeführt wird.

Die Anordnung der Röhrchen 9 stellt sicher, daß das Heizmedium sowohl in Reifenumfangsrichtung als auch in axialer Richtung (hier von oben nach unten und umgekehrt) zirkuliert. Dadurch findet ein sehr gutes Durchmischen von heißem und etwas kühlerem Wasser statt, so daß sich an allen Stellen innerhalb des Reifeninnenraumes zumindest in wesentlichen eine gleich hohe Temperatur einstellt.

Für eine noch weitere Verbesserung des Durchmischens kann es günstig sein, wenn mehrere Röhrchen 9 an unterschiedlichen Stellen positioniert werden.

Erwähnt sei ferner, daß anstelle von Röhrchen auch Schläuche verwendet oder auch Rohre mit Schläuchen kombiniert werden können. Beim Ausführungsbeispiel gemäß Fig. 2a und 2b ist es außerdem günstig für eine gute Wärmeisolierung der das Heizmedium transportierenden Teile der erfindungsgemäßen Vorrichtung, wie Röhrchen, Schläuche und Pumpe, Sorge zu tragen.

## Patentansprüche

1. Verfahren für eine mit einem dampfförmigen Heizmedium betriebene, mit oder ohne Balg arbeitende Heizpresse für Fahrzeugluftreifen oder für einen torusförmigen Teil von Fahrzeugluftreifen, wobei das während der Vulkanisation entstehende Kondensat, vorzugsweise unter Ausnützung des herrschenden Überdruckes, mittels zumindest eines im Bereich der tiefsten Stelle im Reifen- oder Balginneren positionierten Röhrchens, Schlauches od. dgl. abgeleitet wird, dadurch gekennzeichnet, dass das während der Vulkanisation entstehende Kondensat ständig abgeleitet wird, so dass während der Vulkanisation die Kondensatmenge im Reifen- bzw. Balginneren minimal bleibt und die über das Heizmedium auf den Reifen wirkende Temperatur während der Vulkanisation an allen Stellen zumindest im Wesentlichen gleich groß ist.

2. Verfahren nach Anspruch 1, dadurch gekennzeichnet, dass das Kondensat in ein Entleerungssystem, insbesondere ein Rohrnetz, geleitet wird, dessen Innendruck höchstens und insbesondere atmosphärischem Druck entspricht.

3. Verfahren nach Anspruch 1 oder 2, dadurch gekennzeichnet, dass das Kondensat über zumindest eine Einströmöffnung (7) an dem an der tiefsten Stelle im Reifen- oder Balginneren positionierten Endbereich des Röhrchens (8), Schlauches od. dgl. abgeleitet wird.

4. Verfahren nach Anspruch 1 bis 3, dadurch gekennzeichnet, dass das Kondensat über einen mit dem Röhrchen (8), Schlauch od. dgl. verbundenen Kondensatableiter od. dgl. nach außen abgeleitet wird.

5. Verfahren nach einem der Ansprüche 1 bis 4, dadurch gekennzeichnet, dass das Röhrchen (8), der Schlauch od. dgl. gemeinsam mit dem Zuleiten des Heizmediums im Reifen- oder Balginneren positioniert wird.

6. Vorrichtung für eine mit einem dampfförmigen Heizmedium betriebene, mit oder ohne Balg arbeitende Heizpresse für Fahrzeugluftreifen oder für einen torusförmigen Teil von Fahrzeugluftreifen mit zumindest einem Röhrchen, Schlauch od. dgl., welches bzw. welcher im Reifen- oder Balginneren über einen Betätigungsmechanismus positionierbar ist und mit einem mit dem Röhrchen, Schlauch od. dgl. verbundenen und insbesondere außerhalb der Heizpresse positionierten Kondensatableiter, dadurch gekennzeichnet, dass das Röhrchen (8), der Schlauch oder dgl. das während der Vulkanisation entstehende Kondensat ständig ableitet.

7. Vorrichtung nach Anspruch 7, dadurch gekennzeichnet, daß das Röhrchen (8), der Schlauch od. dgl. an seinem Ende mit zumindest einer Einströmöffnung (7) versehen ist.

8. Verfahren für eine mit einem flüssigem Heizmedium betriebene, mit oder ohne Balg arbeitende Heizpresse für Fahrzeugluftreifen oder für einen torusförmigen Teil von Fahrzeugluftreifen, wobei das im Reifen- oder im Balginneren befindliche flüssige Heizmedium während der Vulkanisation zum Zirkulieren und Durchmischen gebracht wird, dadurch gekennzeichnet, dass an zumindest einer Stelle im oberen Bereich des Reifen- oder Balginneren Heizmedium abgeführt und an zumindest einer Stelle im unteren Bereich des Reifen- oder Balginneren Heizmedium zugeführt wird.

9. Verfahren nach Anspruch 8, dadurch gekennzeichnet, dass das Heizmedium an zumindest einer Stelle im höchsten Bereich des Reifen- oder Balginneren abgeführt und an zumindest einer Stelle im tiefsten Bereich zugeführt wird.

10. Verfahren nach Anspruch 8 oder 9, dadurch gekennzeichnet, dass das Abführen und Zuführen des Heizmediums innerhalb eines geschlossenen Systems durchgeführt wird.

11. Verfahren nach einem der Ansprüche 8 bis 10, dadurch gekennzeichnet, dass flüssiges Heizmedium mittels einer Pumpe, die außerhalb der Heizpresse positioniert wird, abgeführt und zugeführt wird.

12. Verfahren nach einem der Ansprüche 8 bis 11, dadurch gekennzeichnet, dass die Pumpe mit dem Reifen- oder Balginneren über mindestens zwei Röhrchen (9), Schläuche od. dgl. in Verbindung steht.

13. Vorrichtung für eine mit einem flüssigen Heizmedium betriebene, mit oder ohne Balg arbeitende Heizpresse für Fahrzeugluftreifen oder für einen torusförmigen Teil von Fahrzeugluftreifen, dadurch gekennzeichnet, daß sie zumindest zwei in das Reifen- oder Balginnere führende Röhrchen (9), Schläuche od. dgl., einen Betätigungsmechanismus zum Ein- und Ausfahren dieser Zu- und Ableitungen sowie eine außerhalb der Heizpresse positionierte Pumpe umfasst.

14. Vorrichtung nach Anspruch 13, dadurch gekennzeichnet, dass von den Röhrchen (9), Schläuchen oder dgl. zumindest eines bzw. einer im oberen Bereich und zumindest eines bzw. einer im unteren Bereich des Reifen- oder Balginneren positionierbar ist.

15. Vorrichtung nach Anspruch 13 oder 14, dadurch gekennzeichnet, dass über das im oberen Bereich angeordnete Röhrchen (9), den Schlauch oder dgl. Heizmedium abgepumpt und über zumindest das im unteren Bereich befindliche Röhrchen (9), den Schlauch oder dgl. Heizmedium zugegeben wird.

16. Vorrichtung nach einem der Ansprüche 13 bis 15, dadurch gekennzeichnet, dass die Röhrchen (9), Schläuche oder dgl. Endabschnitte (9a) besitzen, die in Reifenumfangrichtung weisen.

17. Vorrichtung nach Anspruch 16, dadurch gekennzeichnet, dass der Endabschnitt (9a) eines im oberen Bereich des Reifen- oder Balginneren positionierten Röhrchens (9), Schlauches oder dgl. in die zum Endabschnitt (9a) eines im unteren Bereich positionierten Röhrchens (9), Schlauches oder dgl. entgegengesetzte Richtung weist.

18. Vorrichtung nach einem der Ansprüche 13 bis 17, dadurch gekennzeichnet, dass ihre das Heizmedium transportierenden Bauteile, wie Röhrchen (9), Schläuche, die Pumpe und dgl. wärmeisoliert sind.

19. Vorrichtung nach einem der Ansprüche 6, 7 oder 13 bis 18, dadurch gekennzeichnet, dass der Betätigungsmechanismus zumindest eine Hubvorrichtung (3), zumindest eine Kulissenführung (4) od. dgl. sowie einen über diese betätigbaren, mit dem Röhrchen (6, 9), dem Schlauch oder dgl. verbundenen Schlitten (5) umfaßt.
